# EUROPEAN PATENT APPLICATION

(11) **EP 1 882 928 A1**
(43) Date of publication of application: **30.01.2008**
(21) Application number: 06117851.3
(22) Date of filing: 26.07.2006
(51) Int. Cl.: G01N 21/79, G01N 21/25, G01N 21/03

(54) **Device, system and method for photometric measurements**

(71) Applicant: FOSS Analytical AB, 263 21 Höganäs (SE)
(72) Inventor: Petersson, Tommy, SE-252 84 Helsingborg (SE)
(74) Representative: Grönlund, Tim Linus Wilhelm

(57) **Abstract**

An analysis arrangement for use in conjunction with a container adapted to hold and mix fluids during titration of said fluids, which comprises: at least one electromagnetic radiation source, arranged to emit electromagnetic radiation towards said container when the analysis arrangement is used in conjunction with said container, at least one electromagnetic radiation detector, arranged to detect electromagnetic radiation, emitted from the at least one electromagnetic radiation source, which is transmitted through said container when the analysis arrangement is used in conjunction with said container, and a collar, in which said at least one electromagnetic radiation source and said at least one electromagnetic radiation detector are housed and which is adapted to fit around, and at least partially enclose, a section of said container during said use.

## Description

### Technical Field of the Invention

The present invention relates to a device for use in conjunction with a container which is adapted to hold and mix fluids during titration of said fluids, said device comprising an electromagnetic, preferably optical, radiation source and a complementary electromagnetic radiation detector. The invention further relates to a system and a method for colorimetric titration.

### Background Art

Titration is the method of determining the concentration of a substance in solution by adding to it a standard reagent of known concentration in carefully measured amounts until a reaction of definite and known proportion is completed, as shown e.g. by a colour change or by electrical measurement, and then calculating the sought concentration based on the added volume of the standard reagent of known concentration. Examples of titration analysis are acid/base titrations, whereby e.g. the amount of base in a solution is determined through titration with an acidic solution, redox titration, whereby one substance is reduced and another is oxidised, complexometric titration, whereby the amount of a metal ion is determined through titration with a complex former, and precipitation titration, whereby the equilibrium for precipitation of an insoluble compound is determined.

In order to detect the titration endpoint, e.g. in acid/base titration, it is often convenient to use a colorimetric detection system. There are a wide range of commercially available colour indicators which may be used to aid in determining the pH of a solution during acid/base titration. These indicators change colour in response to a pH change. Such a colour change may be detected visually or, conveniently, by photometric means.

Methods and apparatuses for photometric detection of colour changes relating to titration analysis are known in the art.

The US-patent 3 723 062 discloses a method and apparatus for colorimetric titration using an indicator which changes from one coloured form to another at an endpoint. The apparatus comprises a light source which is provided to direct light through a titration solution and through a pair of filters to provide filtered light beams at two wavelengths corresponding to the absorbance characteristics of the two forms of the indicator. Two photoelectric light detectors, one for each of the filtered light beams, provide a pair of signals each of which similarly responds to the concentration of one form of the indicator. The endpoint is indicated when the ratio of the logarithms of these signals reaches a predetermined value.

The US-patent 5 618 495 discloses a colorimetric titration method, a titrator and a colorimeter device. The titrator is used to measure the absorbance of a sample solution, within a container and agitated by a magnetic stirrer, and may include three LEDs, one blue, one green and one red which are focused, by means of a lens, through the sample container. A single photodiode detects the transmittance of the LED light through the sample container. In one automated embodiment of the invention the LEDs are activated sequentially. While each colour LED is turned on, the transmittance is detected and a titration curve for each of the colours are built. These curves are then used to determine the endpoint of the titration reaction.

### Summary of the Invention

An object of the present invention is to provide a device for photometric detection which may easily and reproducibly be arranged in conjunction with a container wherein a titration analysis is to be performed.

Another object of the present invention is to provide a system for photometric detection of a colour change in a titration fluid, wherein accurate photometric measurements may be carried out on a section of the titration fluid volume.

Another object of the present invention is to provide a method for photometric detection of a colour change in a titration fluid, whereby accurate photometric measurements may be carried out on a section of the titration fluid volume.

These objectives are achieved according to the present invention by providing an analysis arrangement, a system and a method for photometric measurements.

According to a first aspect of the invention, there is provided an analysis arrangement for use in conjunction with a container, said container being adapted to hold and mix fluids during titration of said fluids, comprising at least one electromagnetic radiation source, arranged to emit electromagnetic radiation towards said container when the device is used in conjunction with said container; at least one electromagnetic radiation detector, arranged to detect electromagnetic radiation, emitted from the at least one electromagnetic radiation source, which is transmitted through said container when the device is used in conjunction with said container; and a collar, in which said at least one electromagnetic radiation source and said at least one electromagnetic radiation detector are housed and which is adapted to fit around, and at least partially enclose, a section of said container during said use.

The inventive analysis arrangement thus simplifies the process of obtaining photometric data relating to a fluid in a container by assembling the radiation source and the radiation detector in the same conveniently sized and shaped collar, making large and clumsy stationary photometers superfluous. The analysis arrangement is thus assembled to essentially form a single unit, thereby making it easy to handle. In this way the number of components are also kept at a minimum.

By forming the collar in a shape adapted to fit a specific container, or type of container, it is possible to fit it around a predetermined part of this container in a reproducible way. It is also possible to perform photometric measurements directly on a fluid in a container without taking any samples of this fluid for external analysis. It is thus also possible to obtain real-time photometric data regarding the fluid during a reaction in the same.

By having both light emitting units and light detecting units arranged in the same collar, these units are kept in the same predetermined mutual relationship to each other, whereby there is no need to calibrate the system in this respect. The collar is arranged to provide a well-defined path through a liquid in a section of the container. Thus, the analysis arrangement is able to perform reliable and reproducible measurements.

Further, the collar of the analysis arrangement may act as a shroud when the analysis arrangement is attached to the container, thus improving the accuracy of any photometric measurements conducted with the analysis arrangement since attenuation is reduced and stray light problems are minimised.

If the collar is detachable from the container the analysis arrangement may be used for photometric measurements on fluids in a plurality of containers sequentially, making it more versatile as the analysis arrangement may be detached from one container and then reattached to another.

The collar may be in the form of a closed collar, or in the form of a collar which is partially open, as long as the collar is attachable to its target container. A partially open form may be advantageous if e.g. the attaching is facilitated by such a form, or the manufacturing costs relating to the analysis arrangement thus can be reduced by saving material.

The at least one electromagnetic radiation source and the at least one electromagnetic radiation detector are preferably arranged on diametrically opposite sides of the inner perimeter of the collar, facing each other. This is to facilitate photometric measurements along the whole diameter of the section of the container, and also to avoid interference resulting from the radiation emitted by the radiation source being incident at a small angle relative the container wall.

The at least one electromagnetic radiation source may be any convenient such radiation source, preferably a light emitting diode (LED). LEDs are preferred as they are small, reliable, cost effective, and able to emit a narrow specific range of electromagnetic radiation.

Usefully the analysis arrangement comprises a plurality, typically two, electromagnetic radiation sources, some or all of which having different emission λ's selected in order to optimise end-point detection for titrations passing from one colour to an other. Thus a colour shift from e.g. blue to red may be detected using a red and a blue radiation source. Since the wavelengths of red and blue light are quite different, the measurement of transmittance of these two wavelengths may clearly detect a colour shift.

These radiation sources are preferably positioned adjacent to each other. This positioning implies that the two radiation sources may be mounted on the same structural subunit of the analysis arrangement. This subunit may be adapted to be detachable from the collar, whereby the two radiation sources may more conveniently be detached to be e.g. serviced, cleaned or interchanged to provide different emission λ combinations. Also the wiring may be simplified in this way. This positioning further implies that the transmittance of the respective wavelengths may be measured with respect to essentially the same volume of fluid, provided that the radiation from both sources are directed to the same detector. Also, an R, G, B LED configuration may be used, perhaps on a single chip and selectably energisable, alone or in combination, to generate most appropriate emission λ for intended measurement.

The at least one electromagnetic radiation detector may be any convenient such detector, e.g. a photodetector, such as a photo-electric cell or a photo-diode.

Preferably only one detector is comprised in the analysis arrangement. In case several radiation sources are used, these may all be directed to the same detector and be activated in a sequential fashion so as not to interfere with each other when detected by the detector.

According to a second aspect of the invention, there is provided a system for colorimetric titration, comprising a container; a mixing device, which is arranged to extend along a substantial portion of a longitudinal axis of the container; and an analysis arrangement comprising at least one electromagnetic radiation source and at least one electromagnetic radiation detector; said analysis arrangement being as discussed above regarding the first aspect of the invention and arranged to measure the electromagnetic radiation transmitted through the section of the container, said section extending in a plane substantially perpendicular to the longitudinal axis of the container and being located such that it is not intersected by the mixing device in the container.

The container of the system may be any container which allows electromagnetic radiation to pass through its walls, and which may be used for containing a fluid during titration of the same, such as a bottle, flask, beaker or test tube, or any other conveniently shaped container.

The mixing device should be so arranged as to be able to mix the fluid of the container sufficiently to maintain the fluid essentially homogenous during a colorimetric titration analysis. For this to be achieved satisfactorily the mixing device extends through a substantial portion of the container, and thus of the fluid therein, during such an analysis. The mixing device may be any mixing device which is able to achieve this satisfactory mixing. Preferably the mixing device is rotatable and helicoidal. A helicoidal mixing device may be able to transport fluids along the longitudinal axis of the container, whereby forming of layers in the container having different compositions of fluids is prevented.

By thus improving the mixing of a fluid within the container of the system, the radiation transmittance may be measured through a section of the fluid during a titration analysis, which section encompasses a minor portion of the total fluid volume and essentially extends in a plane essentially transverse to the longitudinal axis of the container, as the fluid is essentially homogenous throughout its entire volume. Consequently it will be possible to measure the transmittance transversely, whereby the optical path through the liquid is relatively short and, thus, large amounts of radiation may be detected, improving statistical reliance of the method. Further, the analysis arrangement is advantageously arranged to measure transmittance through a section such that the mixing device does not interfere with the path of the emitted radiation from the radiation source to the detector. Thus, a satisfactory mixing is achieved, while the transmittance may be measured through a section that is not interfered by the mixing device.

If the measurement is conducted at the bottom of the container, interference from e.g. air bubbles or the vortex produced by the mixing device may also be minimised. Thus, according to a preferred embodiment, the mixing device is arranged to extend downwards through the container such that the analysis arrangement may be arranged to monitor a section beneath the mixing device in the container.

According to an embodiment, the mixing device is arranged to extend through at least half of the container. This facilitates a mixing to achieve a homogenous fluid throughout the entire volume of the container.

Further, the mixing device may be detachable from the container. This facilitates cleaning of both the mixing device and the container.

The analysis arrangement may be arranged to measure transmittance through a neck of the container. This provides a very short optical path through the container, whereby the intensity of emitted light may be kept low while obtaining reliable results.

The analysis arrangement may be any such arrangement, e.g. a spectrophotometer. Preferably the analysis arrangement is a photometer such as the analysis arrangement for photometric measurements discussed above.

The advantages of respective feature of the analysis arrangement have been discussed in detail in respect of the analysis arrangement for photometric measurements above. The advantages of such features are equally applicable to the system according to the second aspect of the invention.

According to a third aspect of the invention, there is provided a method for colorimetric titration, comprising adding a colour indicating fluid to a container; adding a titrand to said container; and adding a titrant to said container while mixing said titrant with said titrand and said colour indicating fluid, using a mixing device, to form an essentially homogenous mixture, and while monitoring the electromagnetic radiation transmittance through said mixture by means of an analysis arrangement as discussed above regarding the first aspect of the invention; said mixing being performed by a mixing device extending along a substantial portion of a longitudinal axis of the container; and said analysis arrangement being arranged to measure the electromagnetic radiation transmitted through the section of the container at least partially enclosed by the collar, said section extending in a plane substantially perpendicular to the longitudinal axis of the container and being located such that it is not intersected by the mixing device in the container.

The term "titrand" refers to a sample solution to be titrated using a titrant, as defined below.

The term "titrant" refers to a reagent solution, which has a known concentration and which is used to titrate a titrand.

The colour indicating fluid may be any such fluid, e.g. a pH indicator. It may, depending on the specific type of titration, be preferable to use a colour indicating fluid, such as a pH indicator, which comprises two ore more complimenting colour indicating components, such as a pH indicator comprising bromocresol green and/or methyl red, in order to better monitor pH changes.

The titrand may be any fluid which it may be desirable to titrate. The titrand may e.g. contain an acidic or a basic compound in aqueous solution. The titrand may in one embodiment be formed from a gaseous fluid dissolved in an aqueous solution. In this case, the titrand may be applied to the container by adding a first, liquid fluid and a second, gaseous fluid separately into the container. In the specific case of a Kjeldahl analysis the gaseous, second fluid is ammoniac, which upon dissolution in the liquid, first fluid forms ammonium ions. In a preferred embodiment the liquid, first fluid is a solution of boric acid.

The titrant may be any fluid which can be used as a titrant in titration analysis. In the case of acid/base titration the titrant may be an acid or a base of known concentration. If e.g. the titrand to be titrated is basic, e.g. due to its content of ammonium ions, an acid such as hydrochloric acid may be used as the titrant.

The method for colorimetric titration may be under automated control such that the titration process is dependent on intensity of radiation transmitted through the container.

The advantages of respective features of the system according to the second aspect of the invention have been discussed in detail above. By accomplishing the method according to the third aspect of the invention in a system having such features, these advantages are equally applicable to the method according to the third aspect of the invention.

### Brief Description of the Drawings

The invention will now by way of example be described in further detail with reference to the accompanying drawings.
Fig. 1 is a perspective view of an analysis arrangement according to an embodiment of the invention.
Fig. 2 is a perspective view of a system according to an embodiment of the invention.
Fig. 3 is a flow chart of a method according to an embodiment of the invention.

### Detailed Description of Preferred Embodiments

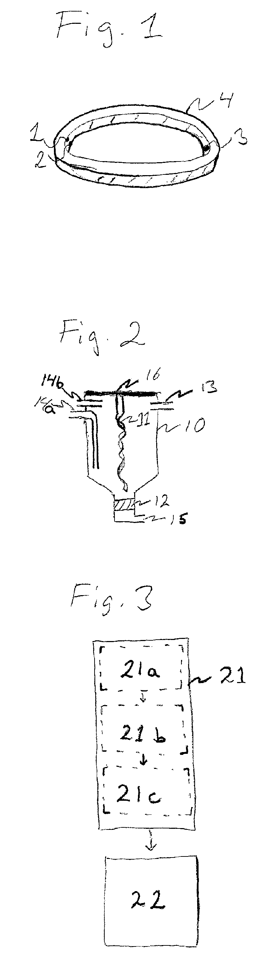

With reference to Figure 1 a currently preferred embodiment of the analysis arrangement for photometric measurements will now be described in more detail.

Two electromagnetic radiation sources 1 and 2, and one electromagnetic radiation detector 3 may be arranged in a collar 4.

The electromagnetic radiation sources 1 and 2 are preferably two light emitting diodes (LEDs), more preferably one red LED and one blue LED. The radiation sources 1 and 2 may be placed adjacent to each other, e.g. one above the other, along the inner rim of the collar 4 and facing the inner rim of the opposite side of the collar 4. The radiation sources 1 and 2 may be arranged, in the collar 4, fitted to a common mounting, said mounting preferably being detachable, together with the radiation sources 1 and 2, from the collar 4. Preferably the radiation sources may be activated and deactivated sequentially, or independently of each other.

The electromagnetic radiation detector 3 may be a photo detector, more preferably a photo-electric cell or a photo diode. The radiation detector 3 may be arranged along the inner rim of the collar 4 facing this same inner rim at the opposite side to the radiation sources 1 and 2 of the collar 4. The radiation detector 3 is arranged facing the radiation sources 1 and 2, preferably as far away from these radiation sources 1 and 2 as possible, while both the detector 3 and the radiation sources 1 and 2 are still arranged along the inner rim of the collar 4, i.e. the radiation sources 1 and 2 and the detector 3 are arranged diametrically opposite each other. The radiation detector is preferably detachably arranged in said collar 4.

The collar 4 encloses an inner opening in which it may receive a container, whereby the collar 4 may be arranged around a section of the container like a collar. The collar 4 may form a closed shape around the inner opening such that the collar is ring- or doughnut-shaped. Alternatively, the collar 4 may be partially open around the inner opening such that the collar 4 is C-shaped.

The analysis arrangement is adapted to fit around a section of a container, such as a bottle, beaker, flask or test tube, or any other conveniently shaped container. The analysis arrangement may be adapted to detachably fit around said section of said container. The analysis arrangement may further be adapted to measure radiation transmittance through said section. If the container holds a fluid, preferably a liquid, the analysis arrangement may be adapted to measure the radiation transmittance through said fluid within said section. Thus the radiation detector 3 may be able to measure the transmittance of radiation emitted by either or both of the radiation sources 1 and 2 through said fluid within said section.

With reference to Figure 2, a currently preferred embodiment of the system for colorimetric titration will now be described in more detail.

A system comprises a container 10, a mixing device 11, and an analysis arrangement 12.

The container may be e.g. a bottle, beaker, flask or test tube, or any other conveniently shaped container. The container may e.g. be in the shape of an inverted bottle, with a neck at the down end and a bulk at the up end. The container may be of a translucent or transparent material allowing for electromagnetic radiation to pass through the container walls. The container may further comprise at least one inlet 13, 14a and 14b, and/or at least one outlet 15 adapted to allow fluids to pass into the container and out of the container respectively.

The mixing device 11 may extend through at least half, preferably more, of the container 10 along a longitudinal axis of said container 10. The mixing device 11 may be rotatable, and/or detachable from the container 10. The mixing device 11 may be fitted in a mounting 16 which, together with the mixing device, may be detachable from the container 10. The mixing device 11 may further be of a helicoidal type. A helicoidal mixing device 11 may be adapted to transport fluids along the longitudinal axis of the container 10, whereby forming of layers in the container having different compositions of fluids is prevented. The mixing device may be attached to the container 10 at the top of said container 10 and extending downwards through the interior of the same. In case the container is in the form of an inverted bottle, the mixing device 11 may be fitted at the upper, bulk end of the container 10, whereby the mixing device 11 together with the mounting 16 may form a lid on the container 10 at the upper end of said container 10.

The analysis arrangement 12 may comprise an analysis arrangement for photometric measurements as discussed above with reference to Figure 1. The analysis arrangement 12 may be fitted around a section of the container 10 in a way so as to facilitate photometric measurements through this section using said analysis arrangement 12. The analysis arrangement 12 may be fitted tightly and precisely around the section of the container 10, thus making sure the measurement is carried out at the same and intended section throughout the measurement. In order for any photometric measurements not to be interfered by the body of the mixing device 11, the analysis arrangement 12 may be arranged to measure transmittance of electromagnetic radiation through a section of the container 10 which is not intersected by the mixing device 11. If the mixing device 11 extends longitudinally from the upper end of the container 10, the analysis arrangement 12 may be arranged to measure transmittance of electromagnetic radiation through a section of the container 10 which is below said mixing device 11. If the container 10 is in the form of an inverted bottle, the analysis arrangement 12 may be arranged to measure transmittance of electromagnetic radiation through a section of the container 10 at the lower, neck end of the container 10.

With reference to particularly the block diagram of Figure 3, a currently preferred embodiment of the method for colorimetric titration will now be described in more detail.

The method may relate to a colorimetric titration wherein a titrand, mixed with a colour indicating fluid, is titrated by addition of a titrant during mixing of said titrant with the titrand/indicating fluid, and during transmittance monitoring of any colour changes of the thus obtained mixture brought on by the indicating fluid therein.

The method may comprise the step 21 of adding a colour indicating fluid and a fluid titrand to a container 10, and the step 22 of gradually adding a fluid titrant to the container 10, during which the combined fluids in the container 10 are mixed, using a mixing device 11 extending along a substantial portion of the longitudinal axis of the container 10, vigorously enough in order to maintain the mixture essentially homogenous throughout the addition of the fluid titrant. During this titrant addition, step 22, an analysis arrangement 12 may be used to measure the transmittance of electromagnetic radiation through a section of the container 10, this section being located such that it is not intersected by the body of the mixing device 11.

The analysis arrangement 12 may in a specific embodiment comprise an analysis arrangement for photometric measurements as discussed above with reference to Figure 1. If the mixing device 11 extends longitudinally from the upper end of the container 10, the analysis arrangement 12 may be arranged to measure transmittance of electromagnetic radiation through a section of the container 10 which is below said mixing device 11. If the container 10 is in the form of an inverted bottle, as discussed above, the analysis arrangement 12 may be arranged to measure transmittance of electromagnetic radiation through a section of the container 10 at the lower, neck end of the container 10.

In one specific embodiment of the inventive method, the titrand may be applied to the container by adding a first, liquid fluid and a second, gaseous fluid separately into the container. In this specific embodiment of the inventive method, the step 21 may comprise a plurality of substeps, 21a, 21b and 21c. In step 21a the first, liquid fluid is added to the container 10, after which, step 21b, the indicating fluid is added to said container 10, followed by step 21c when the second, gaseous fluid is added to the container 10 and is dissolved in the liquid fluid in said container 10.

### Examples

### Example 1: Kjeldahl analysis

The Kjeldahl analysis is a standard analysis method for quantitative determination of nitrogen content in organic matter. The analysis involves an end-point pH titration step.

The organic matter is heated in a mixture of concentrated sulphuric acid and potassium sulphate in the presence of a cupper salt catalyst, whereby the organic matter is digested and its nitrogen is converted into ammonium sulphate. The digest is allowed to cool down, after which an excess of sodium hydroxide is added in order to convert the ammonium ions into ammonia. This ammonia is distilled and the gaseous ammonia is led into a container, through an inlet of the container, and under the surface of an excess of boric acid solution held in said container, thus dissolving the ammonia in the boric acid solution whereby the ammonia is converted back into ammonium ions, and boric acid is converted into borate ions.

The container is made of transparent glass and has the shape of an inverted cylindrical bottle, with a neck at the down end and a bulk at the up end. At the top of the container there is an electric rotatable, helicoidal mixing device detachably fitted. The mixing device extends through two thirds of the container, from the top of the container and downwards, along a longitudinal axis of the container through the centre of said container, but does not enter the down end neck of the container. Around the down end neck of the container there is detachably attached a doughnut shaped collar, in which collar there are detachably arranged two LEDs, one red and one blue, adjacent and on top of each other, and, diametrically opposite the LEDs, a photodiode facing the two LEDs. The LEDs and the photodiode are arranged such that light emitted by the LEDs may travel through the container neck glass wall and any content there within, and be detected by the photodiode on the other side of the neck.

After the ammonia has been dissolved in the boric acid solution, thus forming an ammoniumborate solution, bromocresol green and methyl red are added as colour pH indicators to this solution. The electric rotatable mixing device is activated, thoroughly mixing the solution by lifting liquid along a longitudinal axis of the container, causing the liquid to circulate by moving upwards at the middle of the container, along the mixing device, and moving downwards at the container walls.

During the mixing, hydrochloric acid (titrant) is added drop wise through an inlet of the container, separate from the inlet through which the ammonia was previously led, to the solution. The hydrochloric acid has a known concentration and the volume added to the container is measured with high accuracy. During this drop wise addition of hydrochloric acid, the LEDs of the collar are sequentially activated and deactivated, and the light emitted by the LEDs and transmitted through the container neck and the ammoniumborate solution therein is detected by the photodiode. As the photodiode is unable to determine the wavelength of the light transmitted, the LEDs are not activated at the same time, but are activated one after the other repeatedly, whereby it is possible to detect the transmittance of each wavelength through the solution.

As more and more hydrochloric acid is added to the solution it becomes increasingly less basic. This process is followed by means of the colour pH indicators which affect and change the colour of the solution depending on the pH thereof. This colour change is detected by means of the transmittance of red and blue light through the solution as measured by the photodiode. The photodiode sends a signal, which is proportional to the transmitted and detected light, to a computer unit, and at a predetermined value, corresponding to the reach of end-point (pH 7) for the titration, for the transmittance of red and blue light respectively the computer unit stops the addition of titrant. After the titration has been terminated, the electric mixing device is turned off and the solution is emptied from the container through an outlet at the bottom of said container.

Based on the amount of hydrochloric acid of known concentration added to the solution in order to reach titration end-point (pH 7), the amount of ammonium in the titrated solution, and hence the amount of nitrogen in the organic matter, is determined.

### Example 2: Other ammonium titrations

The sample of Example 1 may be treated in other ways prior to the distillation and titration. Some alternatives are given below.

Ammonium nitrogen may be detected in much the same way as in Example 1 but without digestion and addition of NaOH, and with a magnesium salt as the catalyst.

Also, total nitrogen may be detected in analogy with Example 1, but with addition of a zink/cupper powder to the sample for transformation of nitrate to ammoniac.

Further, Kjeldahl nitrogen in water may be detected in accordance with an ISO standard method. In this case a different indicator is used, namely a mixture of methyl red and methylene blue, whereby the end-point is reached at purple/violet.

All these three above mentioned methods include distillation and titration as described in Example 1.

### Example 3: Detection of sulphur dioxide (sulphite) in foodstuffs

Acid is added to a foodstuff sample. The acid/foodstuff mixture is then distilled and the distillation gas is led into liquid hydrogen peroxide, whereby sulphuric acid is formed. Titration is conducted in analogy with Example 1, but with NaOH as the titrant and methyl red as the pH indicator. The end-point is reached as the titration mixture turns yellow.

### Example 4: Detection of volatile acids in wine

Carbon dioxide is evaporated from a wine sample, followed by distillation of said sample. The liquefied vapour is then titrated in accordance with Example 1, but with NaOH as the titrant. Phenolphtalein is used as indicator, whereby the end-point is reached upon transition from colourless to pink.

It should be emphasized that the preferred embodiments described herein are in no way limiting and that many alternative embodiments are possible within the scope of protection defined by the appended claims.

## Claims

1. An analysis arrangement for use in conjunction with a container, said container being adapted to hold and mix fluids during titration of said fluids, comprising
at least one electromagnetic radiation source, arranged to emit electromagnetic radiation towards said container when the analysis arrangement is used in conjunction with said container,
at least one electromagnetic radiation detector, arranged to detect electromagnetic radiation, emitted from the at least one electromagnetic radiation source, which is transmitted through said container when the analysis arrangement is used in conjunction with said container, and
a collar, in which said at least one electromagnetic radiation source and said at least one electromagnetic radiation detector are housed and which is adapted to fit around, and at least partially enclose, a section of said container during said use.

2. The arrangement according to claim 1, wherein the collar is adapted to fit around the section of said container during said use in a detachable way.

3. The arrangement according to any one of the claims 1-2, wherein the at least one electromagnetic radiation source is a light emitting diode.

4. The arrangement according to any one of the claims 1-3, comprising a plurality of electromagnetic radiation sources positioned adjacent to each other and some or all of which are selected to emit radiation in different λ regions.

5. A system for colorimetric titration, comprising
a container,
a mixing device, which is arranged to extend along a substantial portion of a longitudinal axis of the container, and
an analysis arrangement comprising
at least one electromagnetic radiation source, and
at least one electromagnetic radiation detector,
said analysis arrangement being as claimed in any preceding claim and arranged to measure the electromagnetic radiation transmitted through the section of the container at least partially enclosed by the collar, said section extending in a plane substantially perpendicular to the longitudinal axis of the container and being located such that it is not intersected by the mixing device in the container.

6. The system according to claim 5, wherein said section of said container constitutes a neck of said container.

7. The system according to any one of the claims 5-6, wherein said section is located beneath the mixing device in said container.

8. A method for colorimetric titration, comprising
adding a colour indicating fluid to a container,
adding a titrand to said container, and
adding a titrant to said container while mixing said titrant with said titrand and said colour indicating fluid, using a mixing device, to form an essentially homogenous mixture, and while monitoring the electromagnetic radiation transmittance through said mixture by means of an analysis arrangement according to any of the claims 1-4,
said mixing being performed by a mixing device extending along a substantial portion of a longitudinal axis of the container, and
said analysis arrangement being arranged to measure the electromagnetic radiation transmitted through the section of the container at least partially enclosed by the collar, said section extending in a plane substantially perpendicular to the longitudinal axis of the container and being located such that it is not intersected by the mixing device in the container.
